# EUROPÄISCHE PATENTSCHRIFT

(11) **EP 2 535 270 B1**
(45) Veröffentlichungstag und Bekanntmachung des Hinweises auf die Patenterteilung: **17.10.2018**
(21) Anmeldenummer: 12004319.5
(22) Anmeldetag: 06.06.2012
(51) Int. Cl.: B64D 7/06, B64C 27/04, F41F 3/065

(54) **LASTTRÄGER FÜR EIN FLUGGERÄT**
Load bearer for an aircraft
Porte-charge pour un aéronef

(30) Priorität: 14.06.2011 DE 102011106489
(43) Veröffentlichungstag der Anmeldung: 19.12.2012
(73) Patentinhaber: MBDA Deutschland GmbH, 86529 Schrobenhausen (DE)
(72) Erfinder: Kröner, Christoph, 85301 Schweitenkirchen (DE)
(74) Vertreter: Isarpatent

(56) Entgegenhaltungen:
- EP-A1- 0 453 526
- FR-A1- 2 555 545
- US-A- 4 138 078
- US-A- 4 346 862
- US-A1- 2006 016 940

## Beschreibung

### GEBIET DER ERFINDUNG

Die Erfindung betrifft einen Lastträger zum Ausrichten einer Last eines Fluggeräts, einen Hubschrauber mit einem Lastträger und die Verwendung eines Lastträgers.

### HINTERGRUND DER ERFINDUNG

Hubschrauber können konstruktionsbedingt während der verschieden Flugphasen (Schwebeflug, Steigflug, Reiseflug, etc.) stark die Neigung um die Querachse variieren. Dies kann dazu führen, dass eine starr mit dem Hubschrauber verbundene Außenlast ein ungünstiges aerodynamisches Verhalten entwickelt.

Insbesondere kippen Hubschrauber für einen stabilen Vorwärtsflug die Rotorebene nach vorne, um den Schubvektor des Hauptrotors in die Flugrichtung zu kippen. Dieses Kippen der Rotorebene kann ein Kippen des gesamten Hubschraubers um die Querachse nach sich ziehen. Montierte Außenlasten kippen in diesem Fall ebenfalls um die Querachse und werden dann von der umströmenden Luft ungünstig quer angeströmt. Deshalb kann es sinnvoll sein, die Außenlasten entsprechend der Luftströmung auszurichten. Zur Ausrichtung einer Außenlast um die Querachse in Flugrichtung des Hubschraubers kann daher ein elektromechanischer Lastträger verwendet werden.

Außerdem kann bei der Verwendung von Waffenträgern als Außenlast der Lastträger als eine Richteinheit verwendet werden, die unabhängig von der Hubschrauberlage eine Ausrichtung der Waffe auf das Ziel ermöglicht.

In dieser zweiten Anwendung kann eine Ausrichtung der Außenlast durch den Lastträger (in diesem Fall einen Waffenträger) zum Zielen benutzt werden. Auf diese Weise können die Waffen (montiert als Außenlast) unabhängig von Hubschrauberbewegungen in das Ziel ausgerichtet werden.
Zum Schwenken der Außenlast kann eine Trapezführung für die Außenlast verwendet werden, die durch einen Linearaktor angetrieben werden kann. Nachteile dieser Anordnung können die relativ großen Kräfte sein, die auf den Stellaktor wirken, da sich der wirksame Hebel des Schwerpunktes durch das Verstellen der Kinematik signifikant verschieben kann. Ein weitere Nachteil kann der Platzbedarf des Gestänges einer Trapezführung sein.

Der Stand der Technik ist durch die Dokumente US2006/0016940, EP0453526, US4346862, US4138078, FR2555545 gegeben.

### ZUSAMMENFASSUNG DER ERFINDUNG

Es ist Aufgabe der Erfindung einen einfach aufgebauten und raumsparenden Außenlastenträger zu schaffen, der auch eine geforderte Stellgenauigkeit, Stellgeschwindigkeit sowie eine geforderte Umweltresistenz aufweist kann.
Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.
Ein erster Aspekt der Erfindung betriff einen Lastträger zum Ausrichten einer Last eines Fluggeräts. Das Fluggerät kann dabei insbesondere ein Hubschrauber sein.

Gemäß der Erfindung umfasst der Lastträger eine Trägereinheit zum Befestigen des Lastträgers am Fluggerät. Der Lastträger kann also über die Trägereinheit mechanisch starr mit dem Fluggerät verbunden sein. Die Trägereinheit kann dabei dazu ausgeführt sein, mit einer hubschrauberfesten Struktur, wie beispielsweise einem NATO-Flange verbunden zu werden. Viele Hubschrauber weisen derartige standardisierte Strukturen auf, mit denen Lastträger verbunden werden können.

Gemäß der Erfindung umfasst der Lastträger eine Lasteinheit zum Befestigen der Last. Die Lasteinheit kann mechanisch starr mit der Last verbunden sein, so dass der Lastträger als Schwenkgelenk zwischen Last und Fluggerät aufgefasst werden kann. Insbesondere kann die Lasteinheit gegenüber der Trägereinheit schwenkbar gelagert sein. In der Regel sind die Last und der Lastträger außerhalb des Rumpf des Flugkörpers angeordnet und die Last kann eine Außenlast sowie der Lastträger ein Außenlasträger sein.

Gemäß der Erfindung umfasst der Lastträger eine Lagereinheit zum Schwenken der Lasteinheit gegenüber der Trägereinheit. Die Lagereinheit umfasst wenigstens ein bogenförmiges Schienenelement und wenigstens ein Wagenelement, das entlang des Schienenelements verschiebbar ist. Insbesondere ist das Schienenelement bogenförmig. Ein Schienenelement kann dann bogenförmig sein, wenn es über wesentliche Abschnitte nicht geradlinig verläuft. Insbesondere kann das Schienenelement derart gebogen sein, dass es zur Last hin gekrümmt ist, d.h. die Last bzw. die Lasteinheit zumindest teilweise umrundet.
Das bogenförmige Schienenelement ermöglicht es, die Lasteinheit mit der Last um einen Bereich zu drehen, der den Schwerpunkt der Last umfasst. Dieser Bereich kann als virtueller Drehpunkt aufgefasst werden. Mit anderen Worten kann das Bogenschienen-System zur Lagerung der Last im Schwerpunkt um einen virtuellen Drehpunkt verwendet werden. Das Drehen der Last um ihren Schwerpunkt kann den Vorteil haben, dass eine möglichst lastfreie Winkelverstellung erreicht wird.

Die Komponenten der Lagereinheit, wie etwa das Schienenelement und das Wagenelement, haben damit die Aufgabe die Betriebskräfte aufzunehmen und die Außenlast möglichst reibungsfrei zu lagern. Sie können eines oder mehrere Schienenelemente und eines oder mehrere Wagenelemente umfassen. Die Schienenelemente sind durch die Anpassung des Biegeradius an verschiedene Lasten adaptierbar.

Es ist zu verstehen, dass unter dem Begriff Einheit eine Baugruppe verstanden werden kann, die dazu ausgeführt ist, die jeweilige Funktion der Einheit auszuüben. Die Lagereinheit kann also eine Baugruppe sein mit der die Lasteinheit gegenüber der Trägereinheit gelagert ist.

Gemäß einer Ausführungsform der Erfindung weist das Schienenelement zwei Lagerflächen auf, die jeweils orthogonal zu einer Schwenkachse des Lastelements verlaufen . Der oder die Wagenelement können auf diesen Lagerflächen laufen, beispielsweise mittels Kugellagern.

Gemäß einer Ausführungsform der Erfindung ist die Lasteinheit gegenüber der Trägereinheit um eine Schwenkachse schwenkbar, beispielsweise kann das bogenförmige Schienenelement ein Kreissegment umfassen. Wird der Radius des Schienenelements so gewählt, dass der Schwerpunkt der Last auf der Schwenkachse liegt, führt dies dazu, dass auf die Last wirkende Kräfte (die am Schwerpunkt ansetzen) zu radialen Kräften zwischen Schienenelement und Wagenelement führen. Damit kann die Aufnahme von Kräften durch das Lager und das Bewegen der Last durch das Lager, das in der Regel über im wesentlichen radiale Kräfte erfolgt, nahe vollständig entkoppelt werden.

Zusammenfassend kann das bogenförmige Schienenelement auf einer Kreisbahn verlaufen. Die Lagerfläche bzw. die Lagerflächen des Schienenelements können damit einen konstanten Abstand bzw. Radius zu der Schwenkachse aufweisen. In der Regel wird der Radius des Schienenelement zwischen 0,3 und 0,8 m betragen Wenn der Lastträger über wenigstens ein Bogenschienenelement geführt wird, dessen Bogenradius genau auf einen repräsentativen Abstand des Schwerpunktes einer Last abgestimmt ist, kann dies mehrere Vorteile haben.

Erstens kann die Last lastfrei ausgerichtet bzw. geschwenkt werden. Alle von außen wirkenden Kräfte auf die Last können vom Schienenelement aufgefangen werden. Ein Verstellaktor bzw. ein Stellglied muss in diesem Fall ausschließlich die Massenträgheit der Last bewegen sowie die Reibung in der Lagerung überwinden und ist dann von den restlichen Kräften (Verzögerung und Beschleunigung, Schusslasten, etc.) befreit.

Zweitens kann ein kleiner Bauraum für den Lastträger erreicht werden. Der Bauraum kann kleiner als bei vergleichbaren Lastträgern sein und kann damit zu einem geringerer aerodynamischer Widerstand führen.

Drittens kann durch eine Reduzierung von Außenkräften auf das Stellglied eine höhere Stellgenauigkeit des Lastträgers bezüglich des Schwenkwinkels erreicht werden. Dies kann insbesondere bei der Verwendung des Lastträgers als Waffenträger wichtig sein.

Gemäß einer Ausführungsform der Erfindung erstreckt sich das bogenförmige Schienenelement über einen Winkelbereich von etwa 45° bis 65°, beispielsweise von 50° bis 60°. Die Lagereinheit kann dabei zwei Wagenelemente umfassen, die mit einem Abstand von etwa 30° auf dem bogenförmigen Schienenelement angeordnet sind. Auf diese Weise kann ein Schwenkbereich bzw. Stellbereich zwischen 20° und 30° erreicht werden.

Gemäß einer Ausführungsform der Erfindung ist ein Radius des bogenförmigen Schienenelements derart gewählt, dass die Last vom der Lasteinheit um einen Schwerpunkt der Last schwenkbar ist. Wenn sich der Schwerpunkt der Last somit in etwa im Drehpunkt des "virtuellen Lagers" befindet, ist es möglich, die Last fast ohne Krafteinsatz zu bewegen. Im wesentlichen die Massenträgheitskräfte sowie die Lagerreibung müssen in diesem Fall überwunden werden. Diese Kräfte können über den ganzen Stellbereich des Lastträger konstant sein und somit auf das Stellglied über den gesamten Stellweg immer unter den gleichen Kraftbedingungen wirken. Dies kann insbesondere bei einem kreisförmigen Schienenelement der Fall sein. Damit kann auch die Stellgenauigkeit über den gesamten Stellweg auf hohem Niveau konstant bleiben. Auch kann die Stellgenauigkeit unabhängig von äußeren auf die Außenlast wirkenden Kräften sein.

Gemäß der Erfindung ist das Schienenelement mechanisch starr am Lastelement befestigt und das Wagenelement mechanisch starr am Trägerelement befestigt.

Gemäß einer Ausführungsform der Erfindung umfasst die Lagereinheit ein ansteuerbares Stellglied bzw. einen Aktor. Das Stellglied kann dazu ausgeführt sein, das Schwenken der Lasteinheit gegenüber der Trägereinheit zu bewirken. Mit anderen Worten kann der Lastträger ein aktives Stellglied umfassen, dass die Richtbzw. Schwenkarbeit leistet. Das Stellglied kann die Aufgabe haben, die zur Verstellung benötigte Kraft bereitzustellen.
Ein Stellglied kann jegliche Art von Mechanik umfassen, die dazu in der Lage ist, selbständig ein Schwenken der Lasteinheit zu bewirken. Beispielsweise kann das Stellglied einen Linearmotor, einen Linearaktor mit Elektromotor, einen Getriebemotor, oder einen Hydraulikkolben umfassen. Das Stellglied kann dabei von einer Steuerung des Fluggeräts derart angesteuert werden, dass die Lasteinheit eine bestimmte Stellung gegenüber der Trägereinheit einnimmt.

Gemäß einer Ausführungsform der Erfindung umfasst das ansteuerbare Stellglied einen Stellweggeber, der dazu ausgeführt ist eine Stellung des Stellglieds zu erfassen. Auf diese Weise kann das Stellglied die aktuelle Schwenkposition der Außenlast ermitteln und an die entsprechende Steuerung weitergeben. Die Rückführung bzw. das Rücksenden des aktuellen Stellwinkels an die Steuerelektronik kann also über einen im Stellglied integrierten Stellweggeber geschehen.

Gemäß einer Ausführungsform der Erfindung ist das ansteuerbare Stellglied dazu ausgeführt, eine linearen Bewegung zu erzeugen, die in eine Schwenkbewegung der Lasteinheit gegenüber der Trägereinheit umgewandelt wird. Das Stellglied kann also ein lineares Stellglied sein. Im allgemeinen kann das Stellglied dazu ausgeführt sein, seine Erstreckung in einer Längsrichtung aktiv zu verändern. Mit seinem einen Ende kann das Stellglied mit der Trägereinheit und mit seinem anderen Ende mit der Lasteinheit verbunden sein. Wenn nun das Stellglied seine Länge verändert, werden die Wagenelement auf dem bogenförmigen Schienenelement verschoben und die Lasteinheit nimmt gegenüber der Trägereinheit eine andere Stellung ein.

Gemäß einer Ausführungsform der Erfindung umfasst das ansteuerbare Stellglied eine Aktoreinheit und eine Stange, die vom ansteuerbaren Stellglied linear zueinander bewegbar sind. Die Aktoreinheit kann mit dem Wagenelement direkt oder indirekt starr verbunden sein. Die Stange kann mit einem Ende der bogenförmigen Schiene verbunden sein. Beispielsweise kann die Kolbenstange eines Hydraulikzylinders oder die Gewindestange eines Linearantriebs mit dem Ende der bogenförmigen Schiene verbunden sein.

Beispielsweise kann das ansteuerbare Stellglied als Motor mit Getriebeübersetzung ausgeführt sein, dessen Zahnräder direkt auf die Trägerstruktur der Bogenförmigen Schiene oder direkt auf die Schiene wirken. Auf diese Weise kann der Lastträger in Längsrichtung relativ kompakt gebaut werden.

Gemäß einer Ausführungsform der Erfindung umgreift die Lasteinheit ein Lastschloss für die Last klammerartig. Ein Lastschloss kann eine genormte Schnittstelle zu allen üblichen Außenlasten darstellen. Die Lasteinheit kann also eine Adapterstruktur umfassen, mit der das Lastschloss mit dem Lastträger verbunden werden kann. Weiter kann die Lasteinheit eine Standard-Schnittstelle für Lasten aufweisen. Beispiele für Lastschlösser sind das Area HLRU oder das Alkan 2037.

Alle Lasten sind in der Regel so ausgelegt, dass ihr Schwerpunkt in etwa genau zwischen den beiden Beschlägen eines entsprechenden Lastschlosses liegt. Damit ist nicht mit einer großen Varianz der Schwerpunkte in Hubschrauber-Längsachse zu rechnen.

Die Adaption des Lastträgers an die Höhe des Schwerpunktes relativ zur Befestigung lässt sich durch die Auswahl des geeigneten Schienenradius erreichen. Mit anderen Worten kann ein Schienenelement ausgewählt werden, das einen bestimmten Schienenradius aufweist. Dieser Schienenradius ist auf die Last abgestimmt, die der Lastträger in der Regel tragen soll.

Zusammenfassend kann der Lastträger über eine geeignete Struktur mit dem Hubschrauber verbunden werden. Diese Struktur ermöglicht eine Montage des oder der Schienenelemente sowie die Anbindung eines Stellglieds, beispielsweise eines linearen Stellglieds bzw. Linearaktors. Die andere Seite des oder der Schienenelemente sowie die andere Seite des Linearaktors kann mit dem Lastschloss über eine Adapterstruktur verbunden werden.

Ein weiterer Aspekt der Erfindung betriff einen Hubschrauber mit einer Lastträger, so wie er obenstehend und untenstehend beschrieben ist. Wie bereits gesagt, kann das Fluggerät ein Hubschrauber sein. Insbesondere kann der Hubschrauber derart ausgeführt sein, dass er beim Kippen eines Rotors selbst kippt. Diese Kippbewegung kann durch eine Schwenkbewegung des Lastträgers ausgeglichen werden.
Gemäß einer Ausführungsform der Erfindung verläuft eine Schwenkachse des Lastelements im wesentlichen parallel zur Nickachse des Hubschraubers. Beispielsweise kann der Lastträger seitlich am Hubschrauber angebracht sein, wobei das oder die Schienenelemente im wesentlichen parallel zur Mittelebene des Hubschraubers verlaufen.

Ein weiterer Aspekt der Erfindung betrifft die Verwendung eines Lastträgers, so wie er obenstehend und untenstehend beschrieben ist, zum Schwenken einer Waffe eines Hubschraubers. Beim Ausrichten von Waffen auf ein Ziel kann eine große Stellgeschwindigkeit, Stellbeschleunigung sowie Stellgenauigkeit gefordert sein. Diese hohe Stellgenauigkeit kann dann erreichen werden, wenn der Stellantrieb möglichst von allen Lasten entkoppelt ist und nur noch Richtarbeit leisten muss. Dies ist bei dem Lastträger, so wie er obenstehend und untenstehend beschrieben ist, möglich.
Im Folgenden werden Ausführungsbeispiele der Erfindung mit Bezug auf die beiliegenden Figuren detailliert beschrieben.

### KURZE BESCHREIBUNG DER FIGUREN

**Fig. 1** zeigt eine Frontansicht eines Hubschraubers gemäß einer Ausführungsform der Erfindung.
**Fig. 2** zeigt eine Seitenansicht eines Lastträgers gemäß einer Ausführungsform der Erfindung.
**Fig. 3** zeigt den Lastträger aus der Fig. 2 in einer zweiten Endstellung.
**Fig. 4** zeigt den Lastträger aus der Fig. 2 in einer Zwischenstellung.
**Fig. 5** zeigt ein Diagramm mit an einer Lastträger angreifenden Kräften gemäß einer Ausführungsform der Erfindung.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

### DETAILIERTE BESCHREIBUNG VON AUSFÜHRUNGSBEISPIELEN

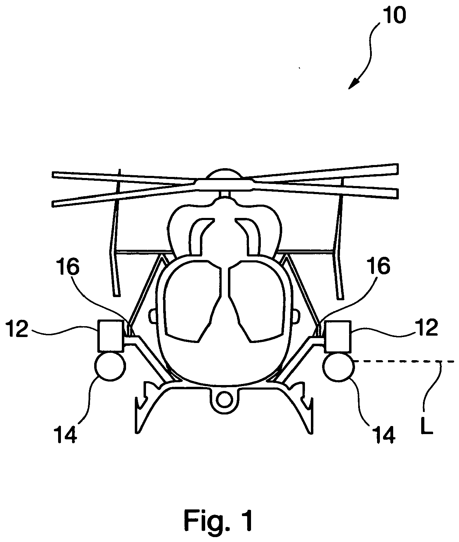

Die Fig. 1 zeigt eine Frontansicht eines Fluggeräts 10 in der Form eines Hubschraubers 10, an dem jeweils an seinen beiden Seiten eine Lastträger 12 befestigt ist. Unter jedem der Lastträger 12 ist eine Last 14 befestigt, beispielsweise eine Waffe, wie etwa ein Raketenwerfer. Mit dem Lastträger 12 ist die Last 14 um die Nickachse des Hubschraubers 10 schwenkbar.

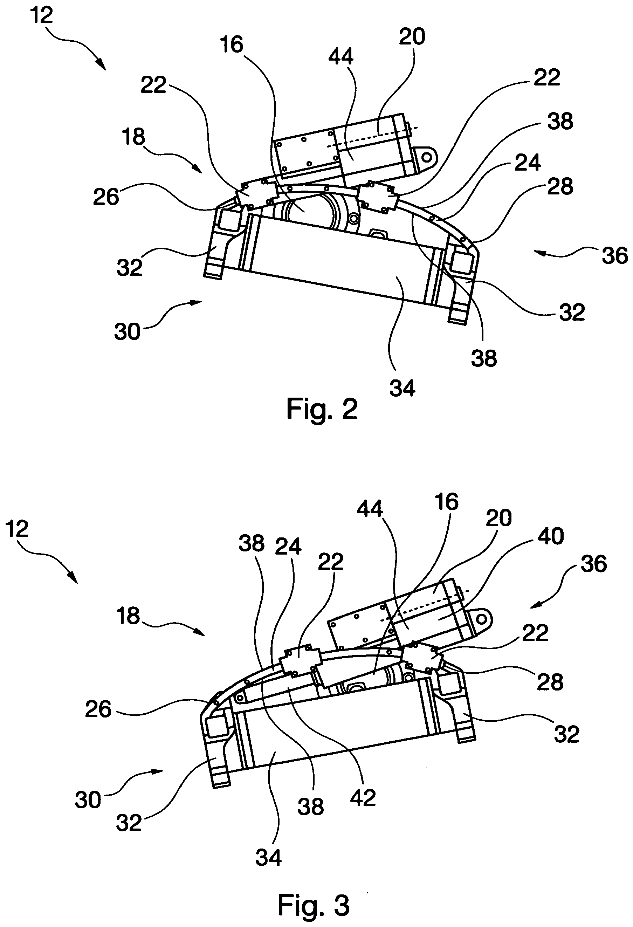

Die Fig. 2 zeigt eine Seitenansicht des Lastträger 12 in Draufsicht. Zur Befestigung am Hubschrauber 10 weist der Lastträger 12 eine Trägereinheit 18 auf. Der Hubschrauber 10 kann eine Standard-Befestigung 16, beispielsweise NATO-Flange 16, aufweisen, an dem der Lastträger 12 über die Trägereinheit 18 befestigt ist. An einer Trägereinheit 18, die mit der Befestigung 16 verbunden ist, sind ein Stellglied 20 und zwei Laufwagen 22 befestigt. In den Laufwagen 22 kann eine Schiene 24 beispielsweise über Kugellager zwischen ihren Enden 26, 28 laufen.

Die Enden der Schiene 24 sind wiederum mit einer Lasteinheit 30 verbunden, die dazu ausgeführt ist eine Last 14 zu tragen und mechanisch zu fixieren. Die Lasteinheit 30 umfasst eine Adapterstruktur 32, die die Last 14 und ein Lastschloss 34 klammerartig umgreift und die dazu dient das Lastschloss 34 mit der Schiene 24 zu verbinden.

Die Schiene 24 und die Laufwagen 22 bilden dabei eine Lagereinheit 36, durch die die Lasteinheit 30 gegenüber der Trägereinheit 18 beweglich ist. Insbesondere kann die Lasteinheit 30 bezüglich der Schwenkachse L um die Trägereinheit 18 schwenken.

Die Schiene 24 weist zwei Laufflächen 38 auf, die jeweils von der Last 14 weg- bzw. zu der Last 14 hinweisen und auf denen die Laufwagen 22 laufen.

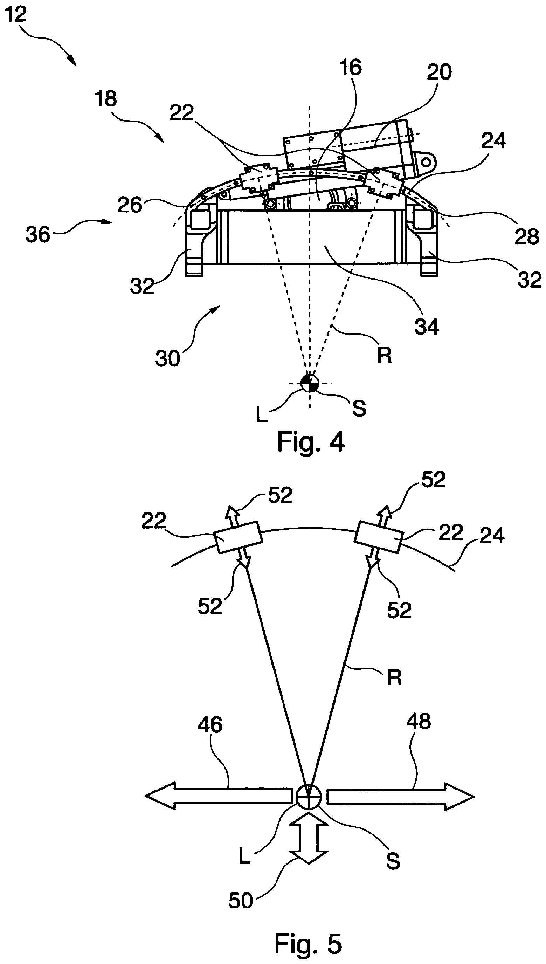

In der Fig. 2 ist der Lastträger 12 in einer ersten Endstellung dargestellt, in der sich der erste, linke Laufwagen 22 bei dem Ende 26 der Schiene 24 befindet. Da die Schiene 24 kreisförmig um die Achse L in einem Winkelbereich von etwa 55° gekrümmt ist (siehe auch Fig. 4) und die beiden Laufwagen 22 bezüglich der Achse L 30° voneinander entfernt an der Trägereinheit 18 angebracht sind, kann die Lasteinheit 30 in etwa 20° relativ zur Trägereinheit 18 schwenken. Die Laufwangen 22 sind dabei so an der Trägereinheit 18 angebracht, dass die Lasteinheit 30 in der in der Fig. 2 gezeigten Endstellung um 12° ausgelenkt ist. In der Fig. 2 weist die Last 14 damit eine maximale Auslenkung von 12° nach oben auf.

In der Fig. 3 ist der Lastträger 12 in einer zweiten Endstellung dargestellt, in der sich der zweite, rechte Laufwagen 22 bei dem Ende 28 der Schiene 24 befindet. In dieser Stellung ist die Lasteinheit um - 8° bezüglich der Trägereinheit 18 ausgelenkt. In der Fig. 3 weist die Last 14 eine maximale Auslenkung von 8 ° nach unten auf.

In der Fig. 3 ist zu erkennen, dass das Stellglied 20 eine Aktoreinheit 40 und eine Stange 42 aufweist, die aus der Aktoreinheit 40 herausgeschoben und in diese eingezogen werden kann. Beispielsweise kann die Aktoreinheit 40 einen Elektromotor umfassen, der die Stange 42 mittels einer Gewindestange bezüglich der Aktoreinheit 40 bewegt. Die Aktoreinheit 40 ist an der Trägereinheit 18 befestigt. Das Ende der Stange 42 ist am Ende der Schiene 24 befestigt.

Darüber hinaus kann die Aktoreinheit 40 einen Stellwertgeber 44 umfassen, der den aktuellen Winkel zwischen Lasteinheit 30 und Trägereinheit 18 bestimmen kann.

Das Stellglied 20 (im gezeigten Fall ein elektrischer Linearaktor 20) ist zwischen der hubschrauberfesten Struktur 16 (z.B. NATO-Flange 16) und dem beweglichen Lastschloss 30 montiert. Jegliche Längenänderungen des Stellglieds 20 bewirken eine Bewegung des Lastschlosses 30 auf der Bahn die die Führungsschiene 24 vorgibt. Die Schiene 24 bewegt sich dabei reibungsoptimiert in den Kugelumlaufbahnen 38 der Schienenwagen 22.

In der Fig. 4 ist der Lastträger 12 in einer Zwischen- bzw. Mittelstellung dargestellt, in der die Laufwagen 22 symmetrisch zu einer Mittelebene angeordnet sind, die senkreckt durch die Schwenkachse L verläuft. Auf der mittleren Abbildung wird der Nominalzustand bei 0° Auslenkung für die Last 14 gezeigt.

Die Schiene 24ist kreisförmig mit einem Radius R gebogen, der so gewählt wurde, dass der Schwerpunkt S der Last 14 auf der Schwenkachse L liegt, die durch den Radius R bestimmt wird. Beim Konstruieren des Lastträgers 12 und beim Einbau des Lastträgers 12 im Hubschrauber 10 sind die Abmessungen, speziell die des Schienenradius R, änderbar. Somit ist der Lastträger 12 an verschiedenen möglichen Außenlasten 14 adaptierbar.

Die Fig. 5 zeigt ein Diagramm mit an am Lastträger 12 von außen angreifenden Kräften 46, 48, 50 aus dem hervorgeht, dass die entsprechenden resultierenden Kräfte 52 stets in radialer Richtung an der Schiene 24 und somit an der Lagereinheit 36 angreifen.

Alle von außen auf die Last 14 wirkende Kräfte, wie etwa Schusskräfte (Rückstoßkräfte) 46, aerodynamische Kräfte 48 sowie Massenkräfte wie die Gewichtskraft 50 der Last 14 wirken auf den Schwerpunkt S der Last 14. Die Richtungen der Kräfte 48, 48, 50 sind als variabel zu sehen, der Angriffspunkt wird jedoch immer der Schwerpunkt S sein. Die Gegenkräfte 52 werden durch die Auflager (d.h. die Wagenelemente 22) als radial um den Schwerpunkt S wirkende Kräfte gebildet. Damit wirken resultierend aus den außen wirkenden Kräften 46, 48, 50 keine Kräfte in Richtung des Stellgliedes 20. Die Kräfte 52 können vollständig durch die Schiene 24 und die Laufwagen 22 aufgenommen werden.

Das Stellglied 20 ist damit entlastet. Damit kann eine größere Stellgenauigkeit des Stellglieds 20 im Vergleich mit konventionellen Außenlastträgern erreicht werden. Durch Anpassung des Schienenradius R kann die Lastlagerung an verschiedene Außenlasten 14 angepasst werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### LISTE DER BEZUGSZEICHEN

- 10: Hubschrauber
- 12: Lastträger
- 14: Last
- 16: Standard-Flansch
- 18: Trägereinheit
- L: Schwenkachse
- 20: Stellglied
- 22: Laufwagen
- 24: Schiene
- 26, 28: Ende der Schiene
- 30: Lasteinheit
- 32: Adapterstruktur
- 34: Lastschloss
- 36: Lagereinheit
- 38: Lauflächen
- 40: Aktoreinheit
- 42: Stange
- 44: Stellwertgeber
- S: Schwerpunkt
- R: Schienenradius
- 46: Rückstoßkraft
- 48: Aerodynamische Kraft
- 50: Gewichtskraft
- 52: Gegenkraft

## Patentansprüche

1. Lastträger (12) zum Ausrichten einer Last (14) eines Fluggeräts (10), der Lastträger (12) umfassend:
eine Trägereinheit (18) zum Befestigen des Lastträgers (12) am Fluggerät (10),
eine Lasteinheit (30) zum Befestigen der Last (14),
eine Lagereinheit (36) zum Schwenken der Lasteinheit (30) gegenüber der Trägereinheit (18),
wobei die Lagereinheit (36) wenigstens ein bogenförmiges Schienenelement (24) und wenigstens ein Wagenelement (22) umfasst, das entlang des Schienenelements (24) verschiebbar ist, **dadurch gekennzeichnet,**
**dass** das Schienenelement (24) mechanisch starr an der Lasteinheit (30) befestigt ist und das Wagenelement (22) mechanisch starr an der Trägereinheit (18) befestigt ist.

2. Lastträger (12) nach Anspruch 1,
wobei die Lasteinheit (30) gegenüber der Trägereinheit (18) um eine Schwenkachse (L) schwenkbar ist.

3. Lastträger (12) nach Anspruch 1 oder 2,
wobei das bogenförmige Schienenelement (24) ein Kreissegment umfasst.

4. Lastträger (12) nach einem der vorhergehenden Ansprüche,
wobei sich das bogenförmige Schienenelement (24) über einen Winkelbereich von etwa 60° erstreckt.

5. Lastträger (12) nach einem der vorhergehenden Ansprüche,
wobei die Lagereinheit (36) zwei Wagenelemente (22) umfasst, die mit einem Abstand von etwa 20° auf dem bogenförmigen Schienenelement (22) angeordnet sind.

6. Lastträger (12) nach einem der vorhergehenden Ansprüche,
wobei ein Radius (R) des bogenförmigen Schienenelements (24) derart gewählt ist, dass die Last (14) von der Lasteinheit (30) um einen Schwerpunkt (S) der Last (14) schwenkbar ist.

7. Lastträger (12) nach einem der vorhergehenden Ansprüche,
wobei die Lagereinheit (36) ein ansteuerbares Stellglied (20) umfasst, das dazu ausgeführt ist, das Schwenken der Lasteinheit (30) gegenüber der Trägereinheit (18) zu bewirken.

8. Lastträger (12) nach Anspruch 7,
wobei das ansteuerbare Stellglied (20) einen Stellweggeber (44) umfasst, der dazu ausgeführt ist, eine Stellung des Stellglieds (20) zu erfassen.

9. Lastträger (12) nach Anspruch 7 oder 8,
wobei das ansteuerbare Stellglied (20) dazu ausgeführt ist, eine linearen Bewegung zu erzeugen, die in eine Schwenkbewegung der Lasteinheit (30) gegenüber der Trägereinheit (18) umgewandelt wird.

10. Lastträger nach einem der Ansprüche 7 bis 9,
wobei das ansteuerbare Stellglied (20) eine Aktoreinheit (40) und eine Stange (42) umfasst, die vom ansteuerbaren Stellglied (20) linear zueinander bewegbar sind,
wobei die Aktoreinheit (40) mit dem Wagenelement (22) verbunden ist, wobei die Stange (42) mit einem Ende der bogenförmigen Schiene (24) verbunden ist.

11. Lastträger (12) nach einem der vorhergehenden Ansprüche,
wobei die Lasteinheit (30) ein Lastschloss (34) für die Last (14) klammerartig umgreift.

12. Hubschrauber (10) mit einer Lastträger (12) nach einem der Ansprüche 1 bis 11.

13. Hubschrauber (10) nach Anspruch 12,
wobei eine Schwenkachse (L) des Lastelements (30) im wesentlichen parallel zur Nickachse des Hubschraubers (10) verläuft.

14. Verwendung eines Lastträgers (12) nach einem der Ansprüche 1 bis 11 zum Schwenken einer Waffe (14) eines Hubschraubers (10).

## Claims

1. Load bearer (12) for aligning a load (14) for an aircraft (10), said load bearer (12) comprising:
a carrier unit (18) for fastening the load bearer (12) to the aircraft (10),
a load unit (30) for fastening the load (14),
a bearing unit (36) for pivoting the load unit (30) relative to the carrier unit (18),
wherein the bearing unit (36) comprises at least a curved rail element (24) and at least a carriage element (22) displaceable along the rail element (24), **characterised in that** the rail element (24) is fastened mechanically rigidly to the load unit (30) and the carriage element (22) is fastened mechanically rigidly to the carrier unit (18).

2. Load bearer (12) according to claim 1,
wherein the load unit (30) can be pivoted relative to the carrier unit (18) around a swivel axis (L).

3. Load bearer (12) according to claim 1 or claim 2, wherein the curved rail element (24) comprises a circle segment.

4. Load bearer (12) according to any one of the preceding claims,
wherein the curved rail element (24) extends across an angular range of about 60°.

5. Load bearer (12) according to any one of the preceding claims,
wherein the bearing unit (36) comprises two carriage elements (22) which are spaced at an angle of approximately 20° from one another on the curved rail element (22).

6. Load bearer (12) according to any one of the preceding claims,
wherein a radius (R) of the curved rail element (24) is chosen such that the load (14) is pivotable by means of the load unit (30) around a centre of gravity (S) of the load (14).

7. Load bearer (12) according to any one of the preceding claims,
wherein the bearing unit (36) comprises a controllable final control element (20) which is provided to effect the pivoting of the load unit (30) relative to the carrier unit (18).

8. Load bearer (12) according to claim 7,
wherein the controllable final control element (20) comprises an actuator travel transducer (44) which is provided to detect a position of the final control element (20).

9. Load bearer (12) according to claim 7 or claim 8,
wherein the controllable final control element (20) is provided for generating a linear motion which is converted into a pivoting motion of the load unit (30) relative to the carrier unit (18).

10. Load bearer according to any one of claims 7 to 9,
wherein the controllable final control element (20) comprises an actuator unit (40) and a rod (42), which are displaceable in a linear manner towards one another by means of the controllable final control element (20), wherein the actuator unit (40) is connected to the carriage element (22),
wherein the rod (42) is connected to an end of the curved rail (24).

11. Load bearer (12) according to any one of the preceding claims,
wherein the load unit (30) grips a load lock (34) for the load (14) in the manner of a clamp.

12. Helicopter (10) with a load bearer (12) according to any one of claims 1 to 11.

13. Helicopter (10) according to claim 12,
wherein a swivel axis (L) of the load element (30) is aligned substantially parallel to the pitch axis of the helicopter (10).

14. Use of a load bearer (12) according to any one of claims 1 to 11 for pivoting a weapon (14) of a helicopter (10).

## Revendications

1. Porte-charge (12) destiné à orienter une charge (14) d'un aéronef (10), le porte-charge (12) comprenant :
une unité de support (18) destinée à fixer le porte-charge (12) sur l'aéronef (10),
une unité de charge (30) destinée à fixer la charge (14), une unité de palier (36) destinée à faire pivoter l'unité de charge (30) par rapport à l'unité de support (18),
l'unité de palier (36) comprenant au moins un élément à rail (24) en forme d'arc et au moins un élément à chariot (22) qui est déplaçable long de l'élément à rail (24), **caractérisé en ce**
**que** l'élément à rail (24) est mécaniquement fixé sur l'unité de charge (30) de manière rigide.

2. Porte-charge (12) selon la revendication 1,
l'unité de charge (30) étant pivotante autour d'un axe de pivotement (L) par rapport à l'unité de support (18).

3. Porte-charge (12) selon la revendication 1 ou 2,
l'élément à rail (24) en forme d'arc comprenant un segment de cercle.

4. Porte-charge (12) selon l'une quelconque des revendications précédentes,
l'élément à rail (24) en forme d'arc s'étendant sur une plage angulaire d'environ 60°.

5. Porte-charge (12) selon l'une quelconque des revendications précédentes,
l'unité de palier (36) comprenant deux éléments à chariot (22) qui sont disposés sur l'élément à rail (22) en forme d'arc avec un écart d'environ 20°.

6. Porte-charge (12) selon l'une quelconque des revendications précédentes;
un rayon (R) de l'élément à rail (24) en forme d'arc étant sélectionné de manière à ce que la charge (14) de l'unité de charge (30) soit pivotante autour d'un centre de gravité (S) de la charge (14).

7. Porte-charge (12) selon l'une quelconque des revendications précédentes,
l'unité de palier (36) comprenant un organe de réglage (20) pilotable qui est réalisé pour provoquer le pivotement de l'unité de charge (30) par rapport à l'unité de support (18).

8. Porte-charge (12) selon la revendication 7,
l'organe de réglage (20) pilotable comprenant un capteur de course de réglage (44) qui est réalisé pour détecter une position de l'organe de réglage (20).

9. Porte-charge (12) selon la revendication 7 ou 8,
l'organe de réglage (20) pilotable étant réalisé pour générer un mouvement linéaire qui est transformé en un mouvement de pivotement de l'unité de charge (30) par rapport à l'unité de support (18).

10. Porte-charge selon l'une quelconque des revendications 7 à 9,
l'organe de réglage (20) pilotable comprenant une unité d'actionneur (40) et une tige (42), lesquelles sont déplaçables de manière linéaire l'une par rapport à l'autre par l'organe de réglage (20) pilotable,
l'unité d'actionneur (40) étant reliée à l'élément à chariot (22),
la tige (42) étant reliée à une extrémité du rail (24) en forme d'arc.

11. Porte-charge (12) selon l'une quelconque des revendications précédentes,
l'unité de charge (30) entourant une culasse de charge (34) pour la charge à la façon d'une pince.

12. Hélicoptère (10) comportant un porte-charge (12) selon l'une quelconque des revendications 1 à 11.

13. Hélicoptère (10) selon la revendication 12,
un axe de pivotement (L) de l'élément de charge (30) s'étendant sensiblement parallèlement à l'axe de tangage de l'hélicoptère (10).

14. Utilisation d'un porte-charge selon l'une quelconque des revendications 1 à 11, destiné à faire pivoter une arme (14) d'un hélicoptère (10).
